(19) **Europäisches Patentamt**
**European Patent Office**
**Office européen des brevets**

(11) **EP 4 588 923 A1**

(12) **EUROPEAN PATENT APPLICATION**
published in accordance with Art. 153(4) EPC

(43) Date of publication:
**23.07.2025 Bulletin 2025/30**

(21) Application number: **23865439.6**

(22) Date of filing: **11.09.2023**

(51) International Patent Classification (IPC):
**C07F 9/11** (2006.01)

(52) Cooperative Patent Classification (CPC):
**A61L 9/01; B01D 15/00; B01J 20/18; C01B 39/38; C01B 39/46; C07F 9/11;** Y02P 10/20

(86) International application number:
**PCT/JP2023/032939**

(87) International publication number:
**WO 2024/058085 (21.03.2024 Gazette 2024/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.09.2022 JP 2022145533**

(71) Applicant: **Refine Holdings Co., Ltd.**
**Anpachi-gun**
**Gifu 503-0212 (JP)**

(72) Inventors:
• **FUJITA Tomoya**
**Tokyo 1000005 (JP)**
• **SUZUKI Takao**
**Tokyo 1000005 (JP)**
• **TAKEYAMA Tomokiyo**
**Tokyo 1000005 (JP)**
• **IWAFUNE Mitsuhiro**
**Tokyo 1000005 (JP)**

(74) Representative: **Onsagers AS**
**P.O. Box 1813 Vika**
**0123 Oslo (NO)**

(54) **METHOD FOR PRODUCING TRIBUTYL PHOSPHATE, PURIFIED TRIBUTYL PHOSPHATE OBTAINED THEREBY, AND EXTRACTANT USING SAME**

(57)     Provided is a method for efficiently removing the butanol, dibutyl phosphate, etc., contained as impurities in tributyl phosphate. The technique of the disclosure is a method for producing tributyl phosphate characterized by having a step that brings crude tributyl phosphate into contact with an aluminosilicate compound in which the molar ratio ($SiO_2/Al_2O_3$) of silica and alumina in the zeolite framework is 10 or more. Also disclosed is a method for producing an extractant that contains tributyl phosphate and, as a diluent, C6 or higher hydrocarbon, wherein the tributyl phosphate is mixed with the diluent after the impurities contained in the component have been removed by contact with an aluminosilicate compound in which the molar ratio of silica and alumina in the zeolite framework is 10 or more.

EP 4 588 923 A1

# EP 4 588 923 A1

## Description

### Technical field

The present technology relates to a method for producing tributyl phosphate, purified tributyl phosphate obtained thereby, and an extractant using the same. In detail, this technology relates to a method for producing tributyl phosphate from which impurities and odor have been removed, purified tributyl phosphate obtained thereby, and an extractant using the same.

### Background technology

Tributyl phosphate (TBP) is an organophosphorus compound represented by a chemical formula $(CH_3CH_2CH_2CH_2O)_3PO$ and is generally produced by an esterification reaction of phosphorus pentachloride or phosphoryl chloride with n-butanol (see Non-Patent Literature 1). Its applications include various solvents, defoamers for paper and textile processing, plasticizers for synthetic rubber, and extraction solvents for rare metals (platinum, uranium).

Typical impurities in tributyl phosphate include n-butanol, dibutyl phosphate, and odorous components (hydrocarbons such as alkenes). These impurities interfere with the performance of tributyl phosphate in the above-mentioned applications, resulting in problems such as reduced product quality or reduced manufacturing efficiency, and it is therefore desirable to remove them as much as possible.

Among the impurities contained in tributyl phosphate, several removal methods for dibutyl phosphate have been proposed in the field of radioactive material recovery. Tributyl phosphate has excellent performance as a solvent for recovering uranium and plutonium, so it is diluted with hydrocarbon solvents and used mainly in nuclear fuel reprocessing plants. But, dibutyl phosphate, the primary hydrolysis product of tributyl phosphate, which is produced when tributyl phosphate is degraded in this field, reduces the purity of the products, uranium and plutonium, to an extremely low level, so attempts are being made to remove it. Alkaline washing has been widely known as a method for removing dibutyl phosphate, but it has not been able to remove it sufficiently.

In Patent Literature 1, in removing dibutyl phosphate degraded and formed in tributyl phosphate used in the nuclear fuel reprocessing process, a method of adsorbing dibutyl phosphate on an adsorbent is disclosed, wherein the tributyl phosphate containing dibutyl phosphate is brought into contact with the adsorbent comprising 40-60% by weight titanium oxide and 60-40% by weight zirconium oxide. However, removal to a satisfactory level has not been achieved by this method.

In addition, no particularly established method has been proposed for the removal of n-butanol among the impurities contained in tributyl phosphate. The vacuum distillation method is known as a widely used method for the purification of tri-ester phosphate as a low-boiling removal method containing alcohol, but it is not preferred because the alkyl phosphates undergo thermal decomposition when heat is applied.

Also, in Patent Literature 2, a method is proposed for treating a crude phosphoric ester in which phosphoric ester, such as trimethyl phosphate, triethyl phosphate, dimethyl monoethyl phosphate, or diethyl monomethyl phosphate, that is an ester of phosphoric acid with methanol or ethanol or an aromatic hydroxy compound, contains large amounts of at least one or more polar solvents selected from water, methanol, and ethanol as impurities, with crystalline hydrous aluminosilicate of alkali metal or alkaline earth metal to obtain high purity phosphoric ester. But the phosphoric ester compounds that are the subject of this technology do not include tributyl phosphate. Furthermore, although it was disclosed that natural and synthetic zeolites, boiling stones, or molecular sieves, can be widely used as crystalline hydrous aluminosilicates of alkali metals or alkaline earth metals which are the treating agents and that the shape of the treatment agent may be spherical, columnar, powdered, etc., and spherical is preferred, particularly, spherical treatment agents with a particle size of 4-12 mesh (diameter of about 2.1 mm to about 6.2 mm) and more preferably 7-10 mesh (diameter of about 2.5 mm to about 3.6 mm) are preferred, there was no further mention of the treating agent.

### Prior art references

### Patent Literature

Patent Literature 1: JP SHO63-188693A
Patent Literature 2: JP 2000-351789A

### Non-patent Literature

Non-patent Literature 1: Org. Synth. 1936, 16, 9

### Summary of Invention

### Problem to be solved

The present technology, therefore, provides a relatively simple method for producing tributyl phosphate of high purity, which solves the problems in conventional technology as described above. The present technology also aims to provide a method for producing an extractant by applying such a method for producing tributyl phosphate and an extractant obtained by this method.

### Means for solving the problem

To solve the above problem, the present inventors have conducted a diligent search and study. As a result, the present inventors have found that a hydrophobic aluminosilicate compound with a molar ratio of silica to alumina ($SiO_2/Al_2O_3$) in the zeolite framework of 10 or more, so-called high-silica zeolite, can be used to remove efficiently n-butanol, dibutyl phosphate and odor components contained in tributyl phosphate as impurities, compared to other adsorbents such as activated carbon and general zeolites, leading to the present technology.

Tributyl phosphate is also suitable as an extractant for radioactive elements, rare earth metals and carboxylic acids, for example, after being diluted in hydrocarbon, etc.

In preparing such an extractant to solve the above problem, the presence of n-butanol, dibutyl phosphate, and odor components, etc., contained as impurities in tributyl phosphate has adverse effects such as reduced extraction efficiency and lower quality of the final product, thus it is desirable to remove these impurities. Here, the present inventors have found that when tributyl phosphate, the main component of the extractant, is present together with hydrocarbon as a diluent, the adsorption and removal of n-butanol and other components do not proceed sufficiently even when the extractant is contacted with the high-silica zeolite as described above. Therefore, the present inventors have developed a method for producing an extractant containing tributyl phosphate as the main component and hydrocarbon with a carbon number of 6 or more as a diluent, by bringing said tributyl phosphate into contact with an aluminosilicate compound with a molar ratio ($SiO_2/Al_2O_3$) of silica to alumina in the zeolite framework of 10 or more to remove impurities contained in the component, then mixing it with the above-mentioned diluent. It was found that an extractant with excellent properties can be provided by this method, leading to the present technology.

Specifically, the first aspect of the present technology, which solves the above problem, is a method for producing tributyl phosphate, characterized by bringing crude tributyl phosphate into contact with a hydrophobic aluminosilicate compound having a molar ratio of silica to alumina ($SiO_2/Al_2O_3$) in the zeolite framework of 10 or more.

In one embodiment of the method for producing tributyl phosphate according to the present technology, the contacting the crude tributyl phosphate with the hydrophobic aluminosilicate compound is carried out by passing the crude tributyl phosphate through at a space velocity of SV = 1 h$^{-1}$ or less, or by contacting it for at least 10 hours or more in a batch or circulation system. The method is shown to be carried out by passing the liquid through a batch or circulating system for at least 10 hours.

In one embodiment of the method for producing tributyl phosphate according to the present technology, the method is characterized in that the contacting crude tributyl phosphate with a hydrophobic aluminosilicate compound results in a butanol concentration of 0.02 % by mass or less and a dibutyl phosphate concentration of 0.01 % by mass or less.

In yet another embodiment of the method for producing tributyl phosphate according to the present technology, it is shown that the hydrophobic aluminosilicate compound is a ZSM-5 (Zeolite Socony Mobil-5) type, beta-type zeolite.

In further another embodiment of the method for producing tributyl phosphate according to the present technology, it is shown that the hydrophobic aluminosilicate compound has a molar ratio of silica to alumina of 10 to 500 in the zeolite framework.

A second aspect of the present technology that solves the above problem is a method for producing an extractant containing tributyl phosphate and hydrocarbon with a carbon number of 6 or more as a diluent, wherein said tributyl phosphate is brought into contact with an aluminosilicate compound having a molar ratio of silica to alumina in the zeolite framework of 10 or more to remove impurities in the tributyl phosphate, and then, the tributyl phosphate is mixed with the diluent.

In one embodiment of the method for producing an extractant according to the present technology, wherein the contacting of the tributyl phosphate with the hydrophobic aluminosilicate compound is carried out by passing the tributyl phosphate through at a space velocity of SV = 1 h$^{-1}$ or less, or by contacting it for at least 10 hours or more in a batch or circulating system.

A third aspect of the present technology that solves the above problem is an extractant containing tributyl phosphate as a main ingredient and hydrocarbon with a carbon number of 6 or more as a diluent, characterized in that the concentration of butanol and dibutyl phosphate as impurities are 0.02 % by mass or less and 0.01 % by mass or less, respectively.

In one embodiment of the extractant of the present technology, the diluent of the prepared extractant comprises at least one selected from the group consisting of hexane, benzene, toluene, octane, isooctane, nonane, decane, undecane, dodecane, o-xylene, m-xylene, p-xylene and ethylbenzene.

## Effect of Invention

In the present technology, impurities are removed from crude tributyl phosphate by bringing it into contact with an aluminosilicate compound with a molar ratio of silica to alumina in the zeolite backbone of 10 or more. This process efficiently removes n-butanol, dibutyl phosphate, and odor components present as impurities, enabling the recovery of highly purified tributyl phosphate.

## Embodiment for Carrying out the Invention

The present technology will now be described in more detail based on the preferred embodiment.

(Method for producing tributyl phosphate)

The method for producing tributyl phosphate, according to the first aspect of the present technology, is characterized by contacting crude tributyl phosphate with a hydrophobic aluminosilicate compound having a molar ratio of silica to alumina ($SiO_2/Al_2O_3$) of 10 or more in the zeolite framework.

### Tributyl phosphate crude

In the method for producing tributyl phosphate according to the first aspect of the present technology, the crude tributyl phosphate to be treated is not particularly limited by its synthesis method or other factors. For example, this method can also be applied to the separation, purification, and reuse of tributyl phosphate from liquid waste containing impurities such as dibutyl phosphate, a primary hydrolysis product of tributyl phosphate, and butanol, which accumulate when tributyl phosphate is used as an extractant or for similar purposes.

Although not particularly limited, crude tributyl phosphate to be treated may contain impurities such as butanol at a concentration (mass fraction) of 0.1% by mass or more, typically 0.1% to 0.3% by mass, and/or dibutyl phosphate at a concentration (mass fraction) of 0.03% by mass or more, typically 0.03% to 0.2% by mass. Additionally, other odor components, such as butene, may be present as trace components at concentrations of up to approximately 0.1% by mass in the gaseous phase when about 30 mL of the sample is placed in a 70 mL sample bottle and sealed with a septum.

### Aluminosilicate compound

On the other hand, in the method for producing tributyl phosphate according to the first aspect of the present technology, the adsorbent used to remove impurities by adsorption upon contact with crude tributyl phosphate, as described above, is a hydrophobic aluminosilicate compound with a molar ratio of silica to alumina ($SiO_2/Al_2O_3$) in the zeolite framework of 10 or more, preferably 10 to 500, and more preferably 40 to 300.

Furthermore, as hydrophobic aluminosilicate compounds, it is desirable to use ZSM-5 (Zeolite Socony Mobil-5) or beta-type zeolites, which have an MFI-type topology, as defined by the International Zeolite Association using a three-letter code, such as those shown in Atlas of Zeolite Framework Types, 6th Revised Edition, Elsevier, Amsterdam, 2007. The use of ZSM-5 or beta-type zeolites enables more efficient adsorption and removal of impurities such as butanol and dibutyl phosphate.

The average pore diameter of hydrophobic aluminosilicate compounds, commonly known as high-silica zeolites, is not particularly limited. However, from the perspective of impurity capture efficiency in crude tributyl phosphate, it is preferably 7 Å or less, more preferably 4 to 7 Å, and even more preferably 5 to 6 Å. The pore diameter of high-silica zeolites can be measured using the following method.

<Method of measuring average pore diameter>

The average pore diameter can generally be determined using gas adsorption methods such as the nitrogen gas adsorption method. It can be measured using commercially available specific surface area and pore size distribution analyzers, such as the Tristar II 3020 series manufactured by Shimadzu Corporation. The numerical values presented in this specification refer to average pore diameters measured using the nitrogen gas adsorption method with the aforementioned device.

In this technology, when the hydrophobic aluminosilicate compound used as the adsorbent has an average pore diameter within the preferred range described above, it is reasonable to expect the adsorption and removal of n-butanol, one of the impurities in crude tributyl phosphate, as its molecular size allows it to enter the pores. However, surprisingly, in addition to n-butanol, dibutyl phosphate, which has a molecular size larger than the average pore diameter, can also be adsorbed simultaneously. The precise mechanism behind this phenomenon is not yet fully understood. However, considering that dibutyl phosphate is hydrophilic and has a butanol backbone, it is believed that, although to a lesser extent than **n**-butanol, it can still be removed by the hydrophobic aluminosilicate compound.

Furthermore, odor components present in crude tributyl phosphate can also be effectively adsorbed and removed when the hydrophobic aluminosilicate compound has an average pore diameter within the preferred range described above. The odor components in crude tributyl phosphate are presumed to be gases such as butenes, which are generated during the thermal decomposition of tributyl phosphate. This efficient adsorption is likely due to the molecular size of these butenes matching the aforementioned average pore diameter.

The shape of the hydrophobic aluminosilicate compound used as the adsorbent is not particularly limited. However, from the perspective of contact efficiency, it is generally preferable for it to be granular, cylindrical, or spherical. These forms can be packed into a designated column or similar apparatus to facilitate contact with crude tributyl phosphate.

When the hydrophobic aluminosilicate compound is in granular form, its average particle size is preferably around 1 to 5 mm, and more preferably around 1 to 2 **mm.** In the case of a spherical form, the average particle size is preferably around 1 to 5 mm, and more preferably around 2 to 3 **mm.** The average particle size of the hydrophobic aluminosilicate compound can be determined using a laser diffraction/scattering particle size analyzer.

Contact process

In the contact process, crude tributyl phosphate is brought into contact with a hydrophobic aluminosilicate compound to sufficiently facilitate adsorption and removal of impurities present in the crude tributyl phosphate. This process may be performed in a continuous flow system, a batch system, or a circulation system, as long as efficient impurity removal is achieved.

The duration and conditions of the contact process depend on the quantity and proportion of impurities such as butanol, dibutyl phosphate, and odor components present in the crude tributyl phosphate. While not particularly limited, in a continuous flow system, the space velocity (SV) is preferably $1\ h^{-1}$ or lower, more preferably in the range of 0.1 to $0.6\ h^{-1}$. In a batch or circulation system, a contact time of at least 10 hours, and more preferably between 17 and 75 hours, is desirable.

Here, "space velocity" as used in this specification refers to the rate at which the crude tributyl phosphate, the liquid being treated, passes through the adsorbent packed in the adsorption column. It is expressed by the following formula:

$$\text{space velocity}\quad SV = Q/V\ (1/hr)$$

wherein:

Q: Flow rate ($m^3/hr$)
V: Volume of adsorbent in the adsorption column ($m^3$)

In the method for producing tributyl phosphate according to this technology, it has been found as demonstrated in later examples that, during the adsorption process by the hydrophobic aluminosilicate compound on each impurity contained in the crude tributyl phosphate, the hydrophobic aluminosilicate compound preferentially adsorbs butanol over dibutyl phosphate.

Thus, in one approach to this production method, the contact process between crude tributyl phosphate and the hydrophobic aluminosilicate compound can be carried out in two or more stages. In the initial stage(s), butanol is primarily removed, while in the subsequent stage(s), dibutyl phosphate is mainly removed. This staged approach enhances the efficiency of impurity removal and facilitates the separation of adsorbed components from the hydrophobic aluminosilicate compound, as well as the regeneration of the adsorbent.

The environmental conditions for the contact process are not particularly restricted. However, the process can be effectively conducted at a temperature of approximately 10-40°C and a pressure of around 101,325 ± 20 Pa.

In implementing the contact process between crude tributyl phosphate and a hydrophobic aluminosilicate compound, there are no particular limitations. However, to enhance contact efficiency, it is preferable to first fill the adsorption column with liquid, then apply a reduced pressure of approximately 2,666.45 to 13,332.2 Pa, and perform degassing of the adsorbent for about 10 minutes. After this step, the liquid should be passed through or subjected to batch processing for a specified time or under conditions where the space velocity (SV) is 1 h$^{-1}$ or lower.

Additionally, since fine particles of the hydrophobic aluminosilicate compound may be present in the treated liquid after the contact process, it is advisable to install a filter to remove these particles. There are no specific limitations on the type of filter used, but examples include depth filters, surface-type filters, and membrane filters.

In the method for producing tributyl phosphate according to the present technology, after the aforementioned contact process, a simple solid-liquid separation of the treated liquid and the hydrophobic aluminosilicate compound yields highly purified tributyl phosphate with an extremely low impurity concentration. Specifically, the butanol concentration is reduced to 0.02 % by mass or lower, preferably 0.01 % by mass or lower, and the dibutyl phosphate concentration is reduced to 0.01 % by mass or lower, preferably 0.005 % by mass or lower.

(Manufacturing Method of Extractant)

The manufacturing method of an extractant according to the present technology is a method for producing an extractant containing tributyl phosphate and a hydrocarbon with six or more carbon atoms as a diluent, wherein said tributyl phosphate is brought into contact with an aluminosilicate compound with a molar ratio of silica to alumina of the zeolite framework of 10 or more, thereby removing impurities contained in the tributyl phosphate, and subsequently mixing it with the diluent.

In the manufacturing method of the extractant according to the present technology, the tributyl phosphate to be used is first brought into contact with an aluminosilicate compound having a molar ratio of silica to alumina in the zeolite framework of 10 or more, in the same manner as the aforementioned method for producing tributyl phosphate, thereby removing impurities contained in the composition. After this purification step, the tributyl phosphate is mixed with a diluent to obtain an extractant with extremely low impurity content. This procedure is adopted because, in the presence of the diluent, the adsorption of impurities such as butanol and dibutyl phosphate by the aluminosilicate compound tends to be less efficient. Therefore, the adsorption treatment is conducted prior to mixing with the diluent.

In the manufacturing method of the extractant according to the present technology, the process of bringing the tributyl phosphate into contact with the aluminosilicate compound follows the same treatment conditions, preferred ranges, and other parameters as the process of contacting crude tributyl phosphate with the aluminosilicate compound in the aforementioned method for producing tributyl phosphate. Therefore, a detailed explanation is omitted here.

The hydrocarbons with 6 or more carbon atoms used as the diluent to be mixed with tributyl phosphate are appropriately selected depending on the intended application of the diluent. As long as they meet the aforementioned conditions, there are no particular restrictions. Examples of such hydrocarbons include saturated or unsaturated aliphatic and aromatic hydrocarbons. Among them, preferred examples include hexane, benzene, toluene, octane, isooctane, nonane, decane, undecane, dodecane, o-xylene, m-xylene, p-xylene, and ethylbenzene, with toluene, octane, and decane being particularly preferred.

The blending ratio, mixing method, and other conditions for mixing the tributyl phosphate, after being brought into contact with the aforementioned aluminosilicate compound, with the diluent described above are not particularly limited. They can be appropriately selected depending on the intended application of the resulting extractant.

(Extractant)

The extractant according to the present technology may be produced by the extractant manufacturing method described above. It is an extractant containing tributyl phosphate as the main component and a hydrocarbon with 6 or more carbon atoms as a diluent. The extractant is characterized in that the concentration of butanol as an impurity is 0.02 % by mass or less, more preferably 0.014 % by mass or less, and the concentration of dibutyl phosphate as an impurity is 0.01 % by mass or less, more preferably 0.007 % by mass or less.

The extractant with such an extremely low impurity content can be suitably used for various conventionally known applications. These applications are not particularly limited but may include use as an extraction solvent for various metals such as rare metals, rare earth metals, and radioactive metals, as well as an extraction solvent for specific carboxylic acids in mixed solutions.

**Example**

The present technology will be described in more detail based on the following examples. The analysis of each component in the examples below was conducted according to the following methods.

(Dibutyl phosphate)

The dibutyl phosphate content was measured by gas chromatography (GC) after derivatization using a silylating agent under the following conditions.

A BSTFA solution was prepared as a silylating agent by adding 1 g of bis(trimethylsilyl)trifluoroacetamide (BSTFA, manufactured by Kanto Chemical Co., Inc.) to 9 g of n-decane (manufactured by Kanto Chemical Co., Inc.). Approximately 0.5 g of this silylating agent was added to approximately 2 g of the sample solution, followed by heating in a thermostatic bath at 80°C for 1 hour. After the heating, the sample was analyzed by gas chromatography. The dibutyl phosphate content was then quantified using a calibration curve method.

Instrument: GC-2014 (manufactured by Shimadzu Corporation)
Detector: Hydrogen Flame Ionization Detector (FID)
Column: G-100 (Inner diameter: 1.2 mm, Length: 40 m, Film thickness: 3.0 $\mu$m)
Column temperature program: 80°C → increased at 10°C/min → 240°C (held for 44 min)
Injection port conditions: 250°C, Carrier gas flow rate: 15 mL/min

]

(Water Content)

The water content was determined using a Karl Fischer moisture meter.

(Butanol)

The butanol content was quantified using the absolute calibration curve method, and the gas chromatography analysis conditions were as follows:

Instrument: GC-2014 (manufactured by Shimadzu Corporation)
Detector: Hydrogen Flame Ionization Detector (FID)
Column: G-100 (Inner diameter: 1.2 mm, Length: 40 m, Film thickness: 3.0 $\mu$m)
Column temperature program: 80°C → increased at 10°C/min → 240°C (held for 44 minutes)
Injection port conditions: 250°C, Carrier gas flow rate: 15 mL/min

(Other Volatile Components Including Odorous Substances)

For the analysis of other volatile components, including odorous substances, approximately 30 mL of the sample was placed in a 70 mL sample vial and sealed with a septum. A syringe needle was inserted into the vial, and 50 mL of the gas phase part was sampled using a 100 mL syringe equipped with a NEEDLEx (manufactured by Shinwa Chemical Industries, designed for organic solvents). The NEEDLEx was then replaced with a gas-tight syringe, and 0.5 mL of the collected gas was injected into the gas chromatograph, effectively concentrating the headspace part (gas phase part) by a factor of 100 for analysis. The quantification was performed using gas chromatography under the following conditions:

Instrument: GC-2014 (manufactured by Shimadzu Corporation)
Detector: Hydrogen Flame Ionization Detector (FID)
Column: DB-WAX (Inner diameter: 0.25 mm, Length: 60 m, Film thickness: 0.5 $\mu$m)
Column temperature program: 80°C → increased at 10°C/min → 220°C (held for 44 minutes)
Injection port conditions: 250°C, Carrier gas flow rate: 100 mL/min

(Tributyl phosphate)

The amount of tributyl phosphate was determined by gas chromatography, calculating it as the remainder after subtracting the amounts of other detected components.

Examples 1-4 and Comparative examples 1-6

Crude tributyl phosphate to be processed was prepared, which was provided by a partner company. Analysis of this crude tributyl phosphate using the aforementioned method revealed that it contained 0.1214 % by mass of butanol as an impurity. Additionally, when approximately 30 mL of the sample was placed in a 70 mL sample bottle sealed with a septum, the concentration of volatile components in the gas phase was found to be 0.022 % by mass of butene, 0.038 % by mass of chlorobutane, and 0.009 % by mass of butyl ether. (Hereinafter, this crude tributyl phosphate is referred to as "Processing Liquid 1.")

For Processing Liquid 1, 5 % by mass of the adsorbent listed in Table 1 was added, followed by shaking for 18 hours using a shaker (manufactured by Thomas Scientific Instruments, model T-25). After shaking, the supernatant was collected, and the concentration of each component was measured under the aforementioned analytical conditions to compare the adsorption capacity of each component. The obtained results are shown in Table 1.

After adding 5 % by mass of the adsorbent listed in Table 1 to the Treated Liquid 1 and shaking it for 18 hours in a shaker (Thomas Scientific Instruments, T-25), the supernatant was collected and the concentration of each component was measured according to the analysis conditions described above to compare the amount of each component adsorbed. The results obtained are shown in Table 1.

As for the adsorbents, Example 1 and Comparative Example 5 used high silica zeolite $Na^+$ type, Examples 2-4 and 6 used high silica zeolite $H^+$ type, Comparative Example 1 used WH2C (coconut shell-derived activated carbon, manufactured by Osaka Gas Chemicals), Comparative Example 2 used WH5C (coal-derived activated carbon, manufactured by Osaka Gas Chemicals) and Comparative Example 3 used KL (charcoal-derived activated carbon, manufactured by Osaka Gas Chemicals), respectively.

Examples 5-6

A different lot of crude tributyl phosphate provided by the partner company was used as the processing target. Analysis of this crude tributyl phosphate using the aforementioned method revealed that it contained 0.1691 % by mass of butanol as an impurity. (Hereinafter, this crude tributyl phosphate is referred to as "Processing Liquid 2.")

For Processing Liquid 2, 5 % by mass of the adsorbent listed in Table 1 was added, and after shaking for 18 hours using a shaker in the same manner as in Examples 1-4, the supernatant was collected. The concentration of each component was measured under the aforementioned analytical conditions, and the adsorption capacity of each component was compared. The obtained results are shown in Table 1.

As for the adsorbents, Example 5 used high-silica zeolite ($Na^+$ type), and Example 6 used high-silica zeolite ($H^+$ type). [0056]

Comparative example 7

A further different lot of crude tributyl phosphate provided by the partner company was used as the processing target. Analysis of this crude tributyl phosphate using the aforementioned method revealed that it contained 0.0826 % by mass of butanol as an impurity. (Hereinafter, this crude tributyl phosphate is referred to as "Processing Liquid 3.")

For Processing Liquid 3, 5 % by mass of the adsorbent listed in Table 1 was added, and after shaking for 18 hours using a shaker in the same manner as in Examples 1-4, the supernatant was collected. The concentration of each component was measured under the aforementioned analytical conditions, and the adsorption capacity of each component was compared. The obtained results are shown in Table 1.

As for the adsorbent used in Comparative Example 7, molecular sieve 5A (manufactured by Fujifilm Wako Pure Chemical Corporation) was used.

[Table 1]

| | Species | SiO₂/Al₂O₃ ratio [mol/mol] | Pore diameter [Å] | Crystalline structure | Amount of absorbent [g] | Amount of Processing Liquid [g] | Adsorbent ratio [%] | Butanol concentration in Processing Liquid [%] | Butanol amount in Processing Liquid[g] | Butanol concentration in treated liquid [%] | Butanol amount in treated liquid [g] | Butanol absorption rate [%] |
|---|---|---|---|---|---|---|---|---|---|---|---|---|
| Example 1 | high-silica zeolite | 900 | 5.8 | ZSM-5 | 1.51 | 29.58 | 5.1 | 0.1214 | 0.04 | 0.0089 | 0.003 | 92.7 |
| Example 2 | high-silica zeolite | about 900 | 5.8 | ZSM-5 | 1.49 | 30.07 | 5.0 | 0.1214 | 0.04 | 0.0092 | 0.003 | 92.4 |
| Example 3 | high-silica zeolite | 40 | 5.8 | ZSM-5 | 1.5109 | 30.7778 | 4.9 | 0.1214 | 0.04 | below detection limit | 0.00 | 100.0 |
| Example 4 | high-silica zeolite | 40 | 6.5 | bata | 1.5177 | 29.9592 | 5.1 | 0.1214 | 0.04 | 0.0309 | 0.01 | 74.5 |
| Example 5 | high-silica zeolite | 230 | 5.8 | ZSM-5 | 1.5031 | 30.0979 | 4.99 | 0.1691 | 0.0509 | 0.0291 | 0.0088 | 82.8 |
| Example 6 | high-silica zeolite | 340 | 5.8 | ZSM-5 | 1.503 | 30.0858 | 5.00 | 0.1691 | 0.0509 | 0.0261 | 0.0079 | 84.6 |
| Comparative Example 1 | activated charcoal | | 12 - 30 | | 1.53 | 31.25 | 4.9 | 0.1214 | 0.04 | 0.1123 | 0.035 | 7.5 |
| Comparative Example 2 | activated charcoal | | 15 - 50 | | 1.50 | 30.13 | 5.0 | 0.1214 | 0.04 | 0.1195 | 0.036 | 1.6 |
| Comparative Example 3 | activated charcoal | | 20 - 40 | | 1.50 | 30.00 | 5.0 | 0.1214 | 0.04 | 0.1001 | 0.030 | 17.5 |
| Comparative Example 4 | zeolite | 2.6 - 3.0 | 9 | type Y | 1.51 | 30.01 | 5.0 | 0.1214 | 0.04 | 0.1099 | 0.033 | 9.5 |
| Comparative Example 5 | high-silica zeolite | 5.5 | 9 | type Y | 1.50 | 30.00 | 4.8 | 0.1214 | 0.04 | 0.1125 | 0.034 | 7.3 |
| Comparative Example 6 | high-silica zeolite | 100 | 9 | type Y | 1.51 | 30.10 | 4.8 | 0.1214 | 0.04 | 0.1163 | 0.035 | 4.2 |
| Comparative Example 7 | molecular sieve 5A | 2.6 - 3.0 | <5.0 | - | 1.52 | 29.60 | 4.9 | 0.0826 | 0.02 | 0.0789 | 0.023 | 4.5 |

As shown in Table 1, Examples 1 to 6 of the present technology achieved a higher butanol adsorption rate compared to Comparative Examples 1 to 7. Furthermore, the odor of the treated liquid after adsorption treatment was significantly improved in Examples 1 to 6 compared to the untreated processing liquid. When the gas phase part was analyzed by gas chromatography under the above conditions, the peak areas corresponding to odor components were reduced in all cases.

Table 2 presents the concentration of odor components in the untreated Processing Liquid 1 before adsorption treatment, as well as the concentration of odor components in the treated liquids after adsorption treatment in Examples 1 and 2 and Comparative Example 2, based on the results of the gas chromatography analysis.[0059]

[Table 2]

| | Concentration (%) | | |
|---|---|---|---|
| | Butene | Chlorobutane | Butylether |
| Processing Liquid 1 | 0.0224 | 0.038 | 0.009 |
| Example 1 | 0.0032 | below detection limit | below detection limit |
| Example 2 | 0.0013 | below detection limit | below detection limit |
| Comparative Example 2 | 0.0047 | 0.203 | 0.0049 |

Example 7

In order to evaluate the removal efficiency of dibutyl phosphate using the adsorbent of the present technology, simulated processing liquids were prepared by adding n-butanol (manufactured by Kanto Chemical Co., Inc.) and dibutyl phosphate (manufactured by Sigma-Aldrich) to reagent-grade n-tributyl phosphate (manufactured by Kanto Chemical **Co.,** Inc.) at the ratios specified below.

Processing Liquid **4:** n-butanol and dibutyl phosphate each added at 0.1 % by weight to reagent-grade n-tributyl phosphate.

Processing Liquid 5: n-butanol added at **0.1** % by weight and dibutyl phosphate at 0.05 % by weight to reagent-grade n-tributyl phosphate.

Processing Liquid 6: n-butanol added at 0.02 % by weight and dibutyl phosphate at **0.1** % by weight to reagent-grade n-tributyl phosphate.

To these Processing Liquids, 5 % by weight of the same high-silica zeolite used in Example 5 was added. The mixtures were then shaken for 18 hours using a shaker (T-25, manufactured by Thomas Scientific Instruments **Co.,** Ltd.), after which the supernatant was collected and analyzed under the aforementioned conditions to measure the concentration of each component and compare their adsorption amounts. The obtained results are shown in Table **3.**

[Table 3]

| | Stocking quantity of Processing Liquid [g] | amount of adsorbent added [g] | ratio of adsorbent added [%] | Amount of treated liquid after adsorption [g] | Amount of dibutyl phosphate before adsorption | Amount of dibutyl phosphate after adsorption | Dibutyl phosphate removal ratio |
|---|---|---|---|---|---|---|---|
| Processing Liquid 4 | 21.01 | 1.04 | 5.0 | 19.75 | 0.0194 | 0.0092 | 52.9% |
| Processing Liquid 5 | 21.01 | 1.03 | 4.9 | 19.95 | 0.0110 | 0.0072 | 34.8% |
| Processing Liquid 6 | 21.06 | 1.05 | 5.0 | 20.04 | 0.2347 | 0.1220 | 48.0% |

| | Amount of butanol before adsorption [g] | Amount of butanol after adsorption [g] | Butanol removal ratio | Dibutyl phosphate adsorption amount [g/g] | Butanol adsorption amount [g/g] | Dibutyl phosphate adsorption amount [mol/g] | Butanol adsorption amount [mol/g] |
|---|---|---|---|---|---|---|---|
| Processing Liquid 4 | 0.0324 | 0.0045 | 86.0% | 0.010 | 0.027 | 0.00005 | 0.00036 |
| Processing Liquid 5 | 0.2555 | 0.1450 | 43.2% | 0.004 | 0.107 | 0.00002 | 0.00144 |
| Processing Liquid 6 | 0.0040 | 0.0002 | 95.0% | 0.107 | 0.004 | 0.00051 | 0.00005 |

As shown in Table 3, Example 7 of the present technology demonstrated that both dibutyl phosphate and n-butanol, which are impurities in tributyl phosphate, could be adsorptively removed regardless of their concentration differences. In the adsorption treatment using the ZSM-5 type high-silica zeolite employed in Example 7, a tendency to preferentially remove n-butanol was observed. However, even in cases where either n-butanol or dibutyl phosphate was present in excess, there was no indication that one of them remained completely unadsorbed.

Examples 8 and 9

In order to investigate the removal rate of dibutyl phosphate due to differences in the crystal structure of the adsorbents of the present technology, the Processing Liquid 6, prepared in Example 7, was subjected to adsorption treatment using the same high-silica zeolite as in Example 3 (Example 8) or the same high-silica zeolite as in Example 4 (Example 9). A 5 % by mass of each adsorbent was added to the Processing Liquids, and the mixture was shaken for 18 hours using a shaker (T-25, manufactured by Thomas Scientific Instruments). After shaking, the supernatant was collected, and the concentration of each component was measured under the aforementioned analytical conditions to compare the adsorption amounts of each component. The obtained results are shown in Table 4.

[Table 4]

|  | Pore diameter [Å] | SiO$_2$/Al$_2$O$_3$ ratio [mol/mol] | Crystalline structure | Amount of adsorbent added [g] | Stocking quantity of Processing Liquid [g] | Dibutyl phosphate adsorption amount [g/g] | Dibutyl phosphate adsorption amount [mol/g] |
|---|---|---|---|---|---|---|---|
| Example 8 | 5.8 | 40 | ZSM-5 | 1.5109 | 30.7778 | 0.075 | 0.00036 |
| Example 9 | 6.5 | 40 | beta | 1.5177 | 29.9592 | 0.126 | 0.00060 |

As shown in Table 4, the adsorption amount of dibutyl phosphate in tributyl phosphate was higher in Example 9. This indicates that differences in the crystal structure of the adsorbents in the present technology resulted in variations in the adsorption amounts of butanol and dibutyl phosphate. However, both the beta-type and ZSM-5-type high-silica zeolites effectively adsorbed both butanol and dibutyl phosphate.

Reference example 1

In order to confirm the adsorption efficiency of the adsorbent according to the present technology on extractants containing tributyl phosphate and a diluent, the same Processing ligiid 2 used in Examples 5-6 was prepared, along with a simulated extractant (hereinafter referred to as "Processing Liquid 7"), which was prepared by mixing Processing liquid 2 with reagent-grade decane (manufactured by Kanto Chemical Co., Inc.) at a mass ratio of 75:25.

These Processing Liquids 2 and 7 were then subjected to adsorption treatment using the same adsorbent as in Example 1, added in the proportions shown in Table 5. Following the same procedure as in Examples 1-4, the mixtures were shaken for 18 hours using a shaker, after which the supernatant was collected and analyzed under the aforementioned conditions to measure the concentration of each component. The adsorption amounts were then compared, and the results are shown in Table 5.

[Table 5]

|  | Amount of absorbent [g] | Amount of Processing Liquid [g] | Amount of tributyl phosphate used [g] | Amount of decane used [g] | Adsorbent ratio to tributyl phosphate [%] | Butanol concentration in Processing Liquid [%] | Butanol amount in Processing Liquid [g] | Butanol concentration in treated liquid [%] | Butanol amount in treated liquid [g] | Butanol absorption rate [%] |
|---|---|---|---|---|---|---|---|---|---|---|
| Processing Liquid 2 | 1.80 | 30.07 | 30.07 | - | 5.98 | 0.1691 | 0.05 | 0.0077 | 0.002 | 95.4% |
|  | 1.96 | 30.26 | 30.26 | - | 6.46 | 0.1691 | 0.05 | 0.0065 | 0.002 | 96.2% |
|  | 2.11 | 30.03 | 30.03 | - | 7.04 | 0.1691 | 0.05 | 0.0055 | 0.002 | 96.7% |
|  | 2.26 | 30.77 | 30.77 | - | 7.35 | 0.1691 | 0.05 | 0.0050 | 0.002 | 97.0% |
|  | 2.41 | 30.02 | 30.02 | - | 8.01 | 0.1691 | 0.05 | 0.0042 | 0.001 | 97.5% |
| Processing Liquid 7 | 1.81 | 40.75 | 30.56 | 10.19 | 5.91 | 0.1691 | 0.05 | 0.0912 | 0.037 | 28.1% |
|  | 1.95 | 40.30 | 30.23 | 10.07 | 6.45 | 0.1691 | 0.05 | 0.0835 | 0.034 | 34.2% |
|  | 2.10 | 40.59 | 30.44 | 10.15 | 6.90 | 0.1691 | 0.05 | 0.0800 | 0.032 | 36.9% |
|  | 2.25 | 40.34 | 30.25 | 10.08 | 7.42 | 0.1691 | 0.05 | 0.0751 | 0.030 | 40.8% |
|  | 2.41 | 40.40 | 30.30 | 10.10 | 7.94 | 0.1691 | 0.05 | 0.0675 | 0.027 | 46.8% |

As shown in Table 5, the presence of decane as a diluent tended to reduce the adsorption amount of butanol from tributyl phosphate by approximately 60%.

Examples 10 and 11

In order to investigate the effect of different flow rates on the adsorption efficiency of butanol and dibutyl phosphate, adsorption treatment was carried out under the following conditions.

A different lot of crude tributyl phosphate, provided by the cooperating company, was used as the treatment target. Analysis of this crude tributyl phosphate using the aforementioned method revealed that it contained 0.1930 % by mass of butanol as an impurity. A liquid was then prepared by adding 0.1 % by mass of reagent-grade dibutyl phosphate to this crude tributyl phosphate, which was designated as Processing Liquid 8. For the adsorption treatment, 12.0 g of the adsorbent used in Example 5 was packed into a PFA adsorption column (inner diameter: 17.5 mm, length: 120 mm). The adsorption column was filled with the Processing Liquid 8 and subjected to degassing by reducing the pressure to 13,332.2 Pa for 10 minutes to remove air bubbles from the adsorbent. Subsequently, the Liquid was fed into the adsorption column using a metering pump (manufactured by Iwaki Co., Ltd., Model EHN-R) at a flow rate of 0.08 g/min (SV = 0.3) in Example 10 and at 0.91 g/min (SV = 3.2) in Example 11. The concentrations of butanol and dibutyl phosphate were measured under the previously described analytical conditions, and the relationship between flow rate and adsorption capacity was compared. The results are shown in Table 6.

[Table 6]

| SV | Butanol concentration in raw material [%] | Butanol amount in raw material [g] | Butanol concentration in treated liquid [%] | Butanol amount in treated liquid [g] | Butanol absorption rate [%] | Amount of dibutyl phosphate in Processing Liquid [%] | Amount of dibutyl phosphate in Processing Liquid [g] | Dibutyl phosphate concentration in treated liquid [%] | Dibutyl phosphate amount in treated liquid [g] | Dibutyl phosphate absorption rate |
|---|---|---|---|---|---|---|---|---|---|---|
| 0.3 | 0.1930 | 0.0 1 828 | 0.0154 | 0.00625 | 92% | 0.1364 | 0.05532 | 0.0576 | 0.02336 | 58% |
| 3.2 | 0.1930 | 0.07944 | 0.0986 | 0.04058 | 49% | 0.1364 | 0.05614 | 0.1230 | 0.05063 | 10% |

Example 12

In order to investigate the relationship between contact time of the adsorbent and the amount of adsorbed butanol, an adsorption treatment was conducted under the following conditions. A 60.0 g of the adsorbent described in Example 5 was packed into an adsorption column made of SUS304 stainless steel (inner diameter: 28.4 mm, length: 200 mm). Processing Liquid 2 was placed in a 1000 g Erlenmeyer flask, and while stirring with a stirrer, the solution was fed into the adsorption column using a metering pump (manufactured by Iwaki Co., Ltd., Model EHN-R) at a flow rate of 7.1 g/min.

The liquid after feeding to the adsorption column was mixed into the Erlenmeyer flask containing Processing Liquid 2. At predetermined time intervals, samples were collected from the flask, and the butanol concentration was measured under the previously described analytical conditions. The relationship between the circulation time of the solution and the amount of butanol adsorbed was then compared. The results obtained are shown in Table 7.

[Table 7]

| Liquid flow circulation time [h] | Butanol concentration in Processing Liquid [%] | Butanol amount in Processing Liquid[g] | Butanol absorption amount [g/g] | Butanol absorption rate |
|---|---|---|---|---|
| 2.4 | 0.0700 | 0.70 | 0.016 | 59% |

(continued)

| Liquid flow circulation time [h] | Butanol concentration in Processing Liquid [%] | Butanol amount in Processing Liquid[g] | Butanol absorption amount [g/g] | Butanol absorption rate |
|---|---|---|---|---|
| 4.9 | 0.0490 | 0.49 | 0.020 | 71% |
| 7.3 | 0.0380 | 0.38 | 0.022 | 78% |
| 9.8 | 0.0310 | 0.31 | 0.023 | 82% |
| 14.4 | 0.0250 | 0.25 | 0.024 | 85% |
| 17.3 | 0.0210 | 0.21 | 0.025 | 88% |
| 20.2 | 0.0190 | 0.19 | 0.025 | 89% |
| 23.0 | 0.0160 | 0.16 | 0.026 | 91% |

As shown in Table 7, the butanol adsorption volume tended to increase in proportion to the contact time with the adsorbent.

**Claims**

1.  A method for producing tributyl phosphate, comprising: contacting crude tributyl phosphate with a hydrophobic aluminosilicate compound having a molar ratio of silica to alumina ($SiO_2/Al_2O_3$) of 10 or more in the zeolite framework .

2.  The method for producing tributyl phosphate according to claim 1, wherein the contacting the crude tributyl phosphate with the hydrophobic aluminosilicate compound is carried out by passing the he crude tributyl phosphate through at a space velocity of SV = 1 $h^{-1}$ or less, or by contacting it for at least 10 hours in a batch or circulation system.

3.  The method for producing tributyl phosphate according to claim 1 or 2, wherein the concentration of butanol is reduced to 0.02 % by mass or less and the concentration of dibutyl phosphate is reduced to 0.01 % by mass or less by contacting the crude tributyl phosphate with the hydrophobic aluminosilicate compound.

4.  The method for producing tributyl phosphate according to claim 1 or 2, wherein the hydrophobic aluminosilicate compound is a ZSM-5 (Zeolite Socony Mobil-5) type or beta-type zeolite.

5.  The method for producing tributyl phosphate according to claim 1, wherein the hydrophobic aluminosilicate compound has a molar ratio of silica to alumina of 10 to 500 in the zeolite framework.

6.  A method for producing an extractant containing tributyl phosphate and hydrocarbon with a carbon number of 6 or more as a diluent, wherein the tributyl phosphate is contacted with an aluminosilicate compound with a molar ratio of silica to alumina of 10 or more in the zeolite framework to remove impurities in the tributyl phosphate, and then the tributyl phosphate is mixed with the diluent.

7.  The process for producing an extractant according to claim 6, wherein the contacting of tributyl phosphate with a hydrophobic aluminosilicate compound is carried out by passing the liquid at a space velocity of SV = 1 $h^{-1}$ or less, or by contacting it for at least 10 hours in a batch or circulating system.

8.  An extractant containing tributyl phosphate as a main ingredient and hydrocarbon with a carbon number of 6 or more as a diluent, wherein the concentration of butanol and dibutyl phosphate as impurities are 0.02 % by mass or less and 0.01 % by mass or less, respectively.

9.  The extractant according to claim 8, wherein the diluent comprises at least one selected from the group consisting of hexane, benzene, toluene, octane, isooctane, nonane, decane, undecane, dodecane, o-xylene, m-xylene, p-xylene and ethylbenzene.

# EP 4 588 923 A1

| | | |
|---|---|---|
| **INTERNATIONAL SEARCH REPORT** | | International application No. |
| | | **PCT/JP2023/032939** |

**A.    CLASSIFICATION OF SUBJECT MATTER**

*C07F 9/11*(2006.01)i
FI:   C07F9/11

According to International Patent Classification (IPC) or to both national classification and IPC

**B.    FIELDS SEARCHED**

Minimum documentation searched (classification system followed by classification symbols)

C07F9/11

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII), CAplus (STN)

**C.    DOCUMENTS CONSIDERED TO BE RELEVANT**

| Category* | Citation of document, with indication, where appropriate, of the relevant passages | Relevant to claim No. |
|---|---|---|
| X | JP 2015-200552 A (UNIV TOHOKU) 12 November 2015 (2015-11-12)<br>    paragraph [0002] | 8, 9 |
| X | US 2002/0122762 A1 (HITACHI, LTD.) 05 September 2002 (2002-09-05)<br>    paragraph [0002] | 8, 9 |
| X | JP 10-170689 A (ISHIKAWAJIMA HARIMA HEAVY IND CO LTD) 26 June 1998<br>(1998-06-26)<br>    paragraph [0003] | 8, 9 |
| A | US 5000927 A (GENERAL ELECTRIC COMPANY) 19 March 1991 (1991-03-19)<br>    claims | 1-9 |
| A | JP 63-221298 A (HITACHI LTD) 14 September 1988 (1988-09-14)<br>    claims | 1-9 |
| A | CN 103214511 A (JINCHUAN GROUP CO., LTD.) 24 July 2013 (2013-07-24)<br>    claims | 1-9 |

☑ Further documents are listed in the continuation of Box C.        ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 November 2023** | **21 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
| --- |
| **PCT/JP2023/032939** |

| C. | DOCUMENTS CONSIDERED TO BE RELEVANT | |
| --- | --- | --- |
| Category* | Citation of document, with indication, where appropriate, of the relevant passages | Relevant to claim No. |
| A | CN 108003188 A (CHANGCHUN DISCOVERY SCIENCES, LTD.) 08 May 2018 (2018-05-08)<br>claims | 1-9 |
| A | US 3996341 A (FMC CORPORATION) 07 December 1976 (1976-12-07)<br>claims | 1-9 |
| A | NGUYEN, Cuong M. et al. Theoretical Study of the Adsorption of the Butanol Isomers in H-ZSM-5. The Journal of Physical Chemistry C. 11 April 2011, vol. 115, no. 17, pp. 8658-8669, DOI: 10.1021/jp111698b<br>abstract | 1-9 |

Form PCT/ISA/210 (second sheet) (January 2015)

**INTERNATIONAL SEARCH REPORT**
Information on patent family members

International application No.

**PCT/JP2023/032939**

| Patent document cited in search report | | | Publication date (day/month/year) | Patent family member(s) | | | Publication date (day/month/year) |
|---|---|---|---|---|---|---|---|
| JP | 2015-200552 | A | 12 November 2015 | (Family: none) | | | |
| US | 2002/0122762 | A1 | 05 September 2002 | EP | 1237162 | A1 | |
| | | | | paragraph [0002] | | | |
| | | | | JP | 2002-257980 | A | |
| | | | | paragraph [0002] | | | |
| JP | 10-170689 | A | 26 June 1998 | (Family: none) | | | |
| US | 5000927 | A | 19 March 1991 | EP | 389801 | A2 | |
| | | | | claims | | | |
| | | | | JP | 3-17599 | A | |
| | | | | claims | | | |
| JP | 63-221298 | A | 14 September 1988 | (Family: none) | | | |
| CN | 103214511 | A | 24 July 2013 | (Family: none) | | | |
| CN | 108003188 | A | 08 May 2018 | (Family: none) | | | |
| US | 3996341 | A | 07 December 1976 | JP | 51-133232 | A | |
| | | | | claims | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP SHO63188693 A

- JP 2000351789 A

**Non-patent literature cited in the description**

- *Org. Synth.*, 1936, vol. 16, 9

- Atlas of Zeolite Framework Types. Elsevier, 2007